# EUROPEAN PATENT SPECIFICATION

(11) **EP 3 239 089 B1**
(45) Date of publication and mention of the grant of the patent: **09.01.2019**
(21) Application number: 16382184.6
(22) Date of filing: 27.04.2016
(51) Int. Cl.: B66B 7/06, B66B 9/187

(54) **WIND TURBINE WITH ELEVATOR SYSTEM**
WINDRAD MIT AUFZUGSANLAGE
TURBINE ÉOLIENNE PRÉSENTANT UN SYSTÈME D'ASCENSEUR

(43) Date of publication of application: 01.11.2017
(73) Proprietor: AIP APS, 3400 Hillerød (DK)
(72) Inventor: SACRAMENTO GARCÍA, Germán Manuel, 50198 LA MUELA (ES); COLOMA CALVO, Jesús Angel, 50198 LA MUELA (ES)
(74) Representative: ZBM Patents ApS

(56) References cited:
- EP-A1- 2 826 742
- WO-A1-2013/001639
- JP-U- S6 078 370
- US-A1- 2003 196 857
- US-A1- 2012 279 805

## Description

The present disclosure relates to wind turbines comprising an elevator system.

### BACKGROUND

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox. The operation of the generator produces the electricity to be supplied into the electrical grid.
When maintenance works are required inside wind turbines, hoists are often used in the form of elevator-like structures where a lift platform or a cabin for the transportation of people and/or equipment is hoisted up and/or down within the wind turbine tower. Wind turbines are often provided with working platforms arranged at various heights along the height of the tower with the purpose of allowing workers to leave the cabin and inspect or repair equipment where intended.
Elevator systems, in general, include an elevator car being suspended within a hoistway or elevator shaft by ropes, cables or belts. In some systems, e.g. for some electric elevators, a counterweight may be provided depending on e.g. the available space. Other systems such as hydraulic elevators normally do not comprise a counterweight. Typically, elevator systems include a moving, trailing or travelling cable for supplying electric power to the elevator cabin and/or for signal communication between components associated with the elevator car/cabin and e.g. a control panel provided in a fixed location relative to the hoistway. Such a control panel may be provided at any height up in the hoistway.

Documents US 2012/279805 A1 and EP 2826742 A1 disclose elevator systems for wind turbines.

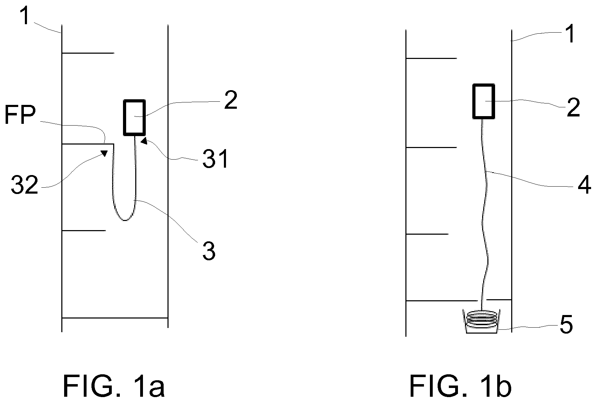

Elevator systems for wind turbines are usually provided with either a travelling or a trailing cable.
The travelling cable is to be understood as a cable suspended on one end from a fixed point of the elevator path/shaft (usually midway up the tower) and on the other end from the elevator cabin. See figure 1a. In between the elevator cabin and the fixation along the tower, the cable may be passed around a pulley system. The travelling cable is therefore always hanging, either during movement of the elevator as well as when the elevator is still at e.g. a bottom parking position.

The trailing cable is to be understood as a cable that is only suspended from the elevator cabin. See figure 1b. The trailing cable is usually stored in a bucket or bin at the bottom of the elevator path when the elevator is at a parking position at the bottom of the elevator path. When the elevator moves in an upwards direction, the cabin pulls the trailing cable and uncoils it from the bin. When the elevator moves in a downwards direction, the trailing cable coils back into the bin due to the effect of gravity.

Document US2003196857 discloses an elevator mechanism, particularly for open lattice (framework) structures utilizing a cable guide in which the power, control, and communication cable(s) is/are routed through a guide which restrains the cable(s) and protects the cable(s) from the wind or other force(s) which might otherwise cause the cable(s) to come in contact with the structure. The cable guide further includes means for precluding jamming or breaking of the cable, in the event the take-up system malfunctions or the cable jams in some manner.

Further a mechanism is provided for shutting down the system if the cable and/or the cable reel jams. This mechanism is particularly suitable for elevators used in tall, open structures.

Wind turbines are high slender structures that are supported by a closed tower. So the cables of the elevator system inside the tower are protected from the wind, contrary to the disclosure of US2003196857. Even though the elevator is closed off from the outside, due to wind forces, the tower may oscillate significantly. The travelling or trailing cable may also begin to move and sway within an elevator path of a wind turbine tower. The cable can thus become tangled up in itself. This is most prominent with higher and more powerful wind turbines, e.g. MW class.

In addition, the elevator path is usually protected with e.g. fences to prevent personnel from falling. Also along the elevator path there may be platforms or ladders. In these cases, the travelling or trailing cable can also strike against such working platforms, platform fences, ladder or tower flanges provided inside the elevator path. Even in some circumstances, e.g. inside a tower of larger wind turbines, the travelling or trailing cable may come in contact with or potentially get entangled with the power cables from the wind turbine generator.
The problem is particularly pronounced in the case of elevator systems guided by taut cables, rather than e.g. rack and pinion systems. The elevator (and therefore also the systems attached to it) have more liberty of swaying than in e.g. a rack and pinion system.
There is thus a need for wind turbines having an elevator system that are reliable and effective and which reduce or eliminate at least some of the afore-mentioned drawbacks.

### SUMMARY

According to a first aspect, a wind turbine comprising an elevator system according to claim 1 is provided. The elevator system comprises an elevator cabin configured to run along an elevator path, a drive for moving the elevator cabin along the elevator path, and a cable for supplying electrical power and/or control signals to the elevator cabin. This cable is connected to the elevator cabin at a first end of the cable. And the elevator system further comprises a cable protection system that is attached to the elevator cabin. The cable protection system comprises a cable support for holding a portion of the cable, an actuator operatively connected with the cable support; and a restraint configured to retain the actuator or the cable support up to a threshold force. The restraint is configured such that when the cable exerts a force on the cable support that is higher than the threshold force provided by the restraint, the actuator pushes against a switch to stop the drive.
According to this aspect, the operative connection between the actuator and the cable support implies that if the cable support moves with respect to the cabin, then the actuator also moves. These movements may be identical or not, depending on the operative connection between the actuator and the cable support. The cable support moves with respect to the cabin, when the cable gets stuck and the elevator cabin continues to move.

The provision of a restraint that holds the actuator and the cable support up to a threshold tension force in combination with the operative connection between the actuator and the cable support guarantees that when a tension exerted by the cable on the cable support exceeds the threshold value provided by the restraint, the actuator moves. As further defined in this aspect, such a movement of the actuator involves pushing a switch to a position in which the elevator drive is stopped thereby stopping the elevator. The actuator may be connected to the cable support through the restraint, either directly or through a further element that may be integrally coupled with the actuator such that the further element and the actuator move in unison.

Throughout the present description and claims, an elevator path is to be understood as a space or passage through which the elevator can travel upwards and downwards. In a wind turbine tower, the elevator path is thus defined inside the tower. There may be a closed space inside the tower along which the cabin travels. Alternatively, the space inside the tower may be open.

In some examples, the restraint may be configured to deform elastically under a bending load. Such a bending load can be provided by the cable for supplying electrical power and/or control signals when it gets tangled. In some of these examples, the restraint may be formed by a cantilever mounted plate extending between a fixed end and a moveable end, and the cable support may be connected to the plate, at or near the moveable end.

An aspect of these examples is that they are quite cost-effective as elements already needed in an elevator system for supporting the cable from the cabin are used. Such elements are the cable support and a supporting plate. The only additional considerations to be done are to select a geometry and a material with appropriate elastic modulus for the supporting plate, to mount the plate in a cantilever manner and the provision of a pin and a switch. The elastic modulus of the material and the cross-section of the plate determine the resistance to bending and the deflection shape. The resistance to bending and the distance from the attachment point for the cable to the fixed end determine the ultimate force (threshold force). Since the restraining threshold force is provided by the plate itself, these examples are rather reliable. They result in a quite compact structure thus saving space e.g. at the bottom or the top of the elevator cabin. And they are quite simple to operate as the elasticity of the plate makes it return back to its initial non-deformed position once the tension in the cable support is released, e.g. once cable entanglement is repaired.
In some examples, the restraint may be configured to provide a magnetic force. In some of these examples, the restraint may comprise a first fixed magnetic plate and a second movable plate. One of the first and second plates may have one or more magnets configured to attract the other plate and the cable support may be connected to the second plate. The second plate may be movably mounted with respect to the first plate and the second plate may be shaped (e.g. provided with a protrusion) such that when the cable exerts a force on the cable support that is higher than the threshold force provided by the magnets and the first or second plate (attraction force), the second plate moves away from the first plate and pushes against the switch. An aspect of these examples is that in circumstances, they may be designed with an attraction force such that once the plates get separated by the over-tension exerted on the cable support by e.g. a cable entanglement, they do not return back to the initial position. In these circumstances, an external push is thus needed to return back to the initial position (magnets attracted by the magnetic plate) once the entanglement is repaired.

In some examples comprising a restraint configured to provide an elastic deformation force, the restraint may comprise an elastically deformable spring. These examples are not part of the invention. Springs of all different characteristics and sizes are readily available and easily mountable. The threshold force can also be very accurately controlled using springs.

In some of these examples, not part of the invention, the actuator comprises a pin having a spring support and a skirt portion, wherein the spring is mounted around the pin and between a support and the spring support. Herein the skirt portion may be configured such that when the cable exerts a force on the cable support that is higher than the threshold force provided by the spring, the skirt portion pushes against the switch.

In other examples comprising an elastically deformable spring, and not forming part of the invention, the actuator may comprise a lever having a pivot and the actuator. The lever may have a first lever portion on a first side of the pivot, and a second lever portion on the opposite side of the pivot. The first lever portion may be connected with the cable support, whereas the second lever portion comprises the actuator, and the spring is connected to the first lever portion. With a lever mechanism again, the exact threshold force can be accurately determined by varying the spring stiffness and the arms of the lever and the cable support.

In some examples, the cable for power supply and/or control signals may be a travelling cable. In these cases, a pulley system may be movably suspended on the travelling cable. This means that the pulley system can self-travel along the travelling cable in order to straighten the cable at all possible positions. In some of these examples, spacers may be provided between the pulley system and rigid guiding elements such as e.g. taut cables that guide the elevator system along the elevator shaft.
In other examples, the cable may be a trailing cable. In these cases, a cable bin or basket may be provided at a base of the elevator path, the bin may be configured to accommodate the trailing cable when the elevator system moves downwards.
In some examples, the switch may operate between an operating position and an interruption position. In the operating position the drive of the elevator system may be operative whereas in the interruption position the drive of the elevator system may be stopped.
In some examples, the elevator cabin may be guided by a pair of taut cables. In a particular case, the pair of taut cables may run laterally from the elevator cabin.

### BRIEF DESCRIPTION OF THE DRAWINGS

Non-limiting examples of the present disclosure will be described in the following, with reference to the appended drawings, in which:
Figures 1a and 1b show partial side views of a wind turbine tower with an elevator system respectively comprising a travelling cable and a trailing cable;
Figures 2a - 2d show a cable protection system according to an example;
Figures 3a - 3d show a cable protection system according to another example;
Figure 4a - 4c show a cable protection system according to a further example, not forming part of the invention; and
Figures 5a - 5c show a cable protection system according to a still further example, not forming part of the invention.

### DETAILED DESCRIPTION OF EXAMPLES

In these figures the same reference signs have been used to designate matching elements.
Figures 1a and 1b show partial side views of a wind turbine tower 1 with an elevator system comprising a cabin 2. In the example of figure 1a, the elevator system may comprise a travelling cable 3 that may be suspended at one end 31 from the elevator cabin 2 and at the other end 32 from a fixed point FP along the elevator path. This fixed point may be a point of attachment to the wind turbine tower 1, or e.g. to a platform arranged within the tower.
In the example of figure 1b, the elevator system may comprise a trailing cable 4 that may only be suspended from the elevator cabin 2. In this example, a bucket 5 may further be provided at a bottom or base of the elevator path, the bucket 5 may be configured to accommodate the trailing cable 4 when the elevator cabin 2 moves downwards.
In the following examples, when reference is made to a "cable" it should be understood as a cable for supplying electrical power and/or control signals. In all cases it may in particular be either a travelling cable or a trailing cable substantially as herein before described.

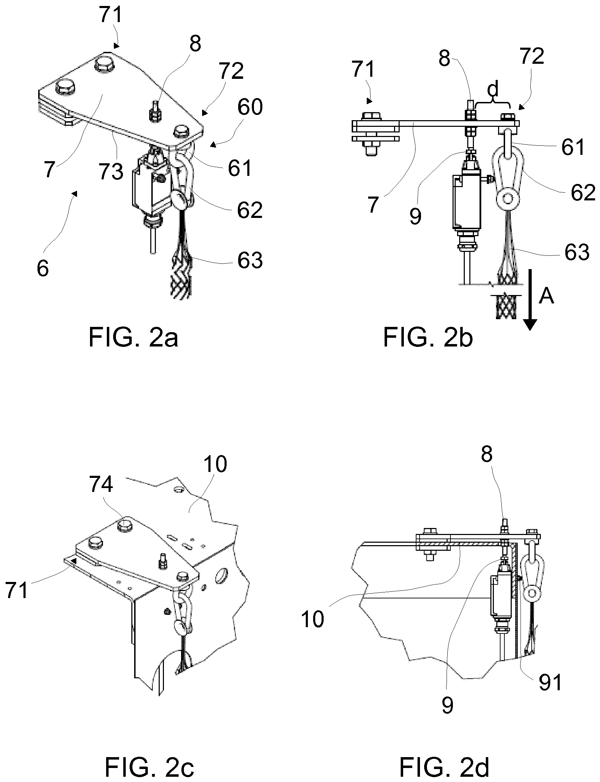

Figures 2a - 2d show a cable protection system 6 according to an example. Figure 2a is a perspective view of the components to be mounted to an elevator cabin, figure 2b is a side view of these same components and figures 2c and 2d show an example of how the protection system 6 of figures 2a and 2b can be actually attached to the elevator cabin.

In this example, the cable protection system 6 may comprise a cable support system 60. In this example the cable support system 60 comprises an eyelet or ring 61 that may in turn be coupled to a clip or hook 62, e.g. a clasp or carabiner, to which the cable may be secured. In some examples, a woven grip or sleeve 63 may be passed around a portion of the cable. This portion of the cable may be close to a cable end portion that is to be attached to the elevator cabin. The cable end portion that leads to a power socket or control panel or alike is not shown in these figures.

In these examples, the woven sleeve may shrink diametrically so as to tighten its grip around the cable as tension is applied to the cable. Alternatively, the cable support system may comprise other elements such as e.g. clamp of suitable shape.

Further in this specific example, the cable protection system 6 comprises an elastically deformable plate 7. The plate 7 may extend in a cantilever manner from a fixed end 71 to a moveable end 72. And the cable support system 60 may be coupled at or near the moveable end 72. Arranging the cable support system closer to the moveable end implies that it can be more easily displaced when the cable gets tangled, i.e. the threshold force can be lowered.

In this example, the plate 7 comprises an elongated shape. In this example, the plate is tapered such that a width of the plate at the fixed end 71 is larger than a width of the plate at the moveable end 72. In alternatives, the plate may comprise other shapes such as e.g. rectangular, oval, trapezoidal or any other elongated shape able to be mounted in a cantilever manner substantially as hereinbefore described.

As further shown in this example, the cable protection system 6 may further comprise a pin 8 that may be fixed to the plate 7 such that the pin 8 traverses the plate 7. In an alternative arrangement, a pin might be mounted to a bottom portion of the plate. The distance d between the location of the pin and the moveable end 72 determines the displacement of the pin 8 when the moveable end 72 moves.

In some examples, the vertical position of the pin 8 may be adjustable e.g. by screwing or unscrewing the pin with respect to the switch. Arranging the pin closer to the switch implies that the threshold force can be lowered.

In this example, the bending stiffness of the plate 7 extending in a cantilever manner provides a restraining threshold force. This way, when a force exerted by the cable (arrow A) on the cable support system 60 is higher than the threshold force provided by the plate 7, the pin 8 moves towards the switch 9 thereby pushing the switch to an interruption position in which the elevator drive is stopped. And when a force exerted by the cable on the cable support system 60 is lower than the threshold force provided by the plate, there may be a gap between the pin 8 and the switch 9 and the switch may be in an operative position in which the elevator drive operates normally.

The distance d may thus be determined along with the material properties of the plate (e.g. elastic modulus), and the geometric properties of the plate (e.g. length of the plate, and cross-section of the plate). Depending on the bending stiffness or deformability of the plate, and distance d, the threshold force can be determined. Or in other words, the distance d can be determined as a function of the chosen threshold force. In examples wherein the pin 8 is adjustable, the threshold force can easily be adjusted when a different cable configuration is used.

As further shown in figures 2c and 2d the fixed end 71 of the plate may be bolted to the elevator cabin, at e.g. a top portion 10 of the cabin. In the example of figures 2c and 2d two bolts 74 may be used however it will be clear that other number of bolts or any other suitable mechanical fixation could be used. Alternatively, the plate may be bolted to e.g. a bottom portion of the elevator cabin.

The switch 9 may also be fixed to a side of the elevator cabin through additional bolts 91 or other fastening means. Alternatively, the switch and/or the plate 7 may be mounted indirectly to the elevator cabin using suitable mounting brackets.

In a variation on this example, a portion of the plate itself, rather than pin 8, can act as an actuator and push the switch, thereby closing or opening an electrical circuit.

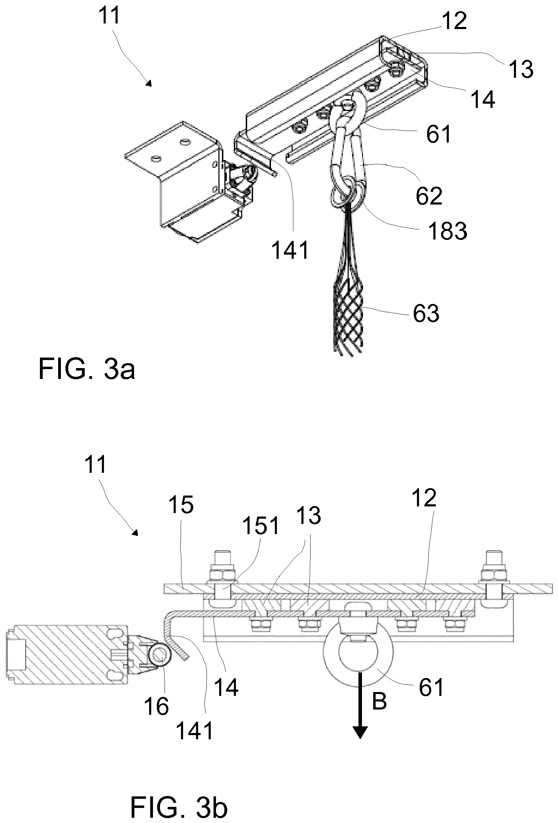

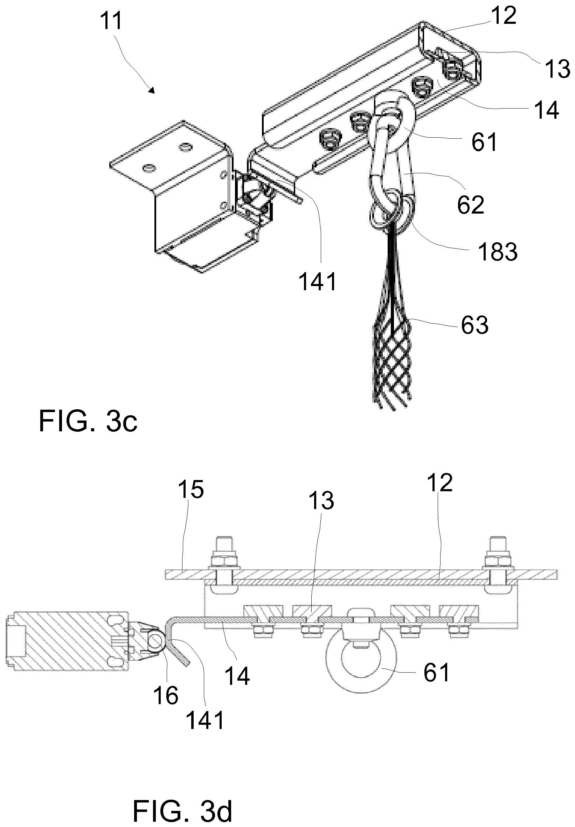

Figures 3a - 3d show a cable protection system 11 according to another example in two different states of the cable protection system 11. Figures 3a and 3b show a state in which there is no force applied to the cable support. This corresponds to the normal operative situation in which the elevator cabin moves and the cable freely moves with it. Figures 3c and 3d show a state in which a force exerted by the cable on the cable support has exceeded the restraining threshold force. Figures 3a and 3c correspond to perspective views and figures 3b and 3d to partial cross-sectional views of these examples.

In this example, the cable protection system 11 comprises a first magnetic plate 12 and one or more magnets 13 provided at a second plate 14. In this example, the first plate 12 is fixed to the elevator cabin (not shown) through a further support plate 15 (see figures 3b and 3d). In alternatives, the first plate may be directly fixed to the elevator cabin.

In this example, a magnetic attraction force between the magnets 13 and the first plate 12 provides a restraining threshold force. In this example, four magnets are shown. However, depending on the desired restraining threshold force and the magnetic force of the magnets or the material of the magnetic plate, other number of magnets, even a single magnet, may be foreseen. Further, in this example, the first plate 12 may be bolted 151 to the further support plate 15. Alternatively other mechanical fixation may be foreseen including, e.g. welding.

Further in this example, the second plate 14 is movably mounted in an up and down direction (corresponding to the upwards and downwards direction of movement of the cabin) with respect to the first plate 12. The second plate 14 in this example has a protrusion 141, e.g. a curved protrusion configured to push against a switch 16 when the restraining threshold force is exceeded. In this example, the protrusion 141 is made by folding an end portion of the second plate 14 to define a substantially C-shaped end. Alternatively, a separate protrusion attached to such an end of the second plate may be foreseen. In yet a further alternative, the shape of the switch can be adapted to be moved when e.g. a substantially straight plate moves in an up and down direction.
The cable protection system 11 may further comprise a cable support attached to the second plate 14. In this example the cable support comprises an eyelet or ring 61. The connection to the cable may be the same or similar as the one described with reference to figures 2a-2d. In some cases, as shown in figures 3a and 3c the cable support also comprises a ring 183 mounted about a hook 62 so as to be freely rotatable and the hook 62 is coupled to the eyelet 61.

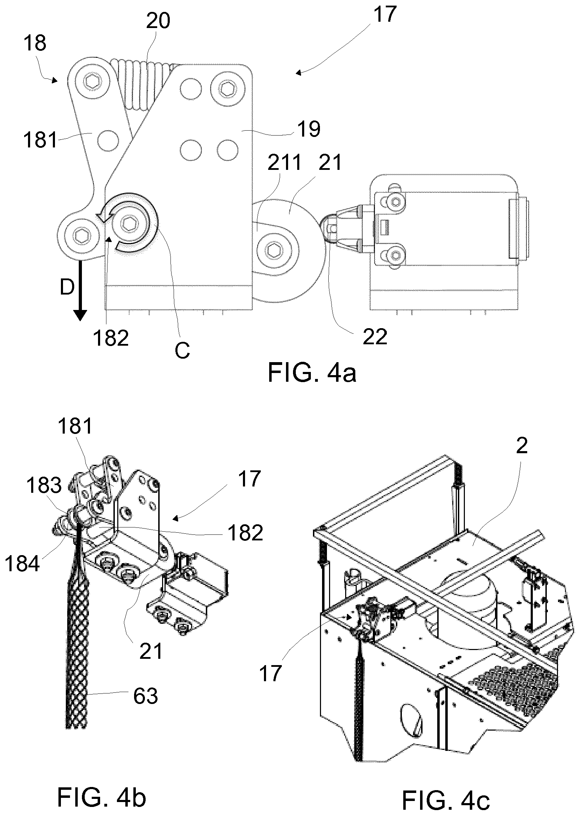

When a force exerted by the cable (arrow B) on the eyelet 61 is higher than the restraining threshold force provided by the magnetic attraction between the first plate 12 and the magnets 13, the second plate 14 is pulled by the eyelet 61 in a downwards direction, i.e. direction of arrow B until it hits a stopper. The protrusion 141 of plate 14 thereby pushes against the switch 16. As shown in figures 3c and 3d, once the restraining threshold force is exceeded, the second plate 14 is separated from the first plate 12 and the protrusion 141 pushes against the switch 16.
In an alternative arrangement, the first plate may carry the magnets, and in a further alternative, both the first and the second plate could carry magnets. Figures 4a - 4c show a cable protection system 17 according to a further example, not forming part of the invention. Figure 4a is a side view, figure 4b a perspective and figure 4c shows an example on how the protection system 17 of figures 4a and 4b can be attached to the elevator cabin 2.
In this example, the cable protection system 17 comprises a lever 18 pivotally mounted about pivot 182. A first lever portion is arranged on a first side of the pivot, whereas a second lever portion is arranged on the other side of the pivot. The pivot 182 is arranged in a casing 19, i.e. the lever 18 may rotate about its pivot 182 as represented by arrow C. A cable support is fixed at the first lever portion. In this example, the cable support is formed by a ring 183 mounted about a shaft 184 of the first lever portion so as to be freely rotatable. In addition, a spring 20 is provided between the casing 19 and a first arm 181 of the first lever portion in order to provide a restraining threshold force between the lever 18 and the casing 19. As shown in figure 4c, the casing 19 may be attached at e.g. a roof of the elevator cabin 2, either directly or through an additional support.
Further, in this example, the cable protection system 17 comprises a roller 21 connected to the lever 18 and configured to push against a switch 22. The roller 21 thus acts as an actuator in this example. In this example, a coupling arm 211 of the second lever portion connects the lever 18 with the roller 21.
Both in this example and in the example of figure 3, the actuator moves substantially in an upwards-downwards movement, whereas the switch moves substantially in a left to right movement.
This way, when a tension exerted by the cable (arrow D) on the cable support is higher than the restraining threshold tension force provided by the spring 20 arranged between the lever 18 and the casing 19, the lever 18 pivots (rotates) about its pivot point 182. Such a pivoting movement of the lever 18 is transmitted to the roller 21 through the coupling arm 211 of the second lever portion such that the roller 21 pushes the switch 16 to an interruption position.

In a variation of this example, a differently shaped actuator may be used, rather than a roller.
In some examples, as shown in figures 4b and 4c, a woven grip or sleeve 63 is passed around a portion of the cable substantially as explained in connection with the examples of figures 2a-2d.

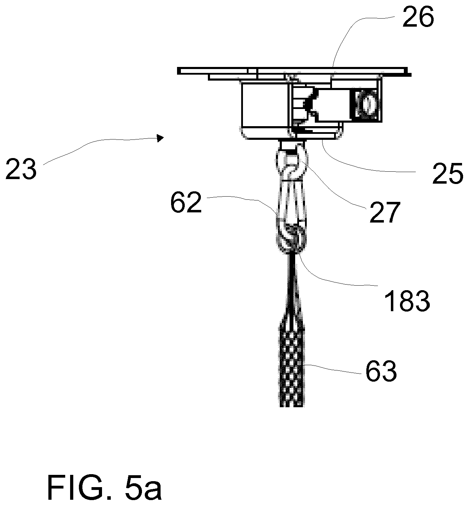

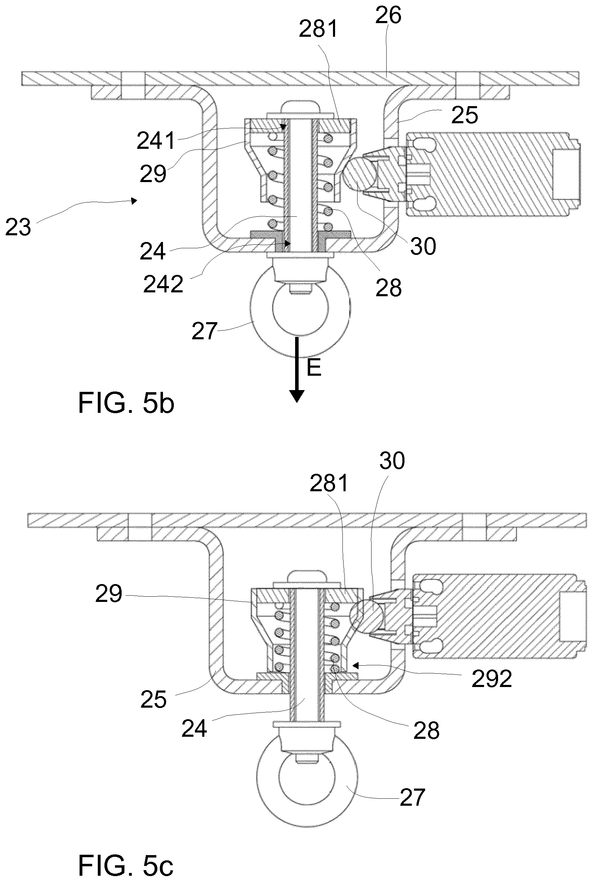

Figures 5a - 5c show a cable protection system 23 according to a still further example, not forming part of the invention. Figure 5a is a perspective view. Figures 5b and 5b show the cable protection system 23 in two different states. Figure 5b shows a state in which there is no tension force applied to the cable support and figure 5c shows a state in which a tension exerted by the cable on the cable support has exceeded the restraining threshold force.

In this example, the cable protection system 23 comprises a pin 24 movably mounted in an up and down direction (corresponding to the upwards and downwards direction of movement of the cabin) on a support bracket 25, e.g. a support bracket with a C-shaped cross-section. The bracket 25 is fixed to the elevator cabin (not shown) through a support plate 26. Alternatively, the support bracket may be directly fixed to the elevator cabin. The pin 24 extends between a first end 241 and an opposite second end 242 that may be provided with a cable support, e.g. an eyelet or ring 27 substantially as explained in connection with the examples of figures 2a-2d.

A spring 28 is provided around the pin 24. The spring 28 extends between the first end 241 and the second end 242. At the first end 241, a spring support 281 is provided against which the spring can abut. A skirt portion 29 may be attached at the first end 241 of the pin. The skirt portion 29 may extend towards the second end 242 and may be configured to push against a switch 30 when the pin moves downwards (arrow E) being pulled by the eyelet 27 provided at its second end 242.

The spring is mounted between the spring support 281 and the bracket 25. When the pin 24 moves, the spring 28 is compressed between the spring support 281 that moves with the pin 24 and the bracket 25.

The skirt portion is suitably shaped in this example to exert a sideways force against the switch. In the example shown in figures 5b and 5c the skirt 29 portion has a tapered portion that increases the width or diameter of the skirt portion 29 in towards the first end 241.

As further shown in figure 5b, an end portion 292 of the skirt facing the second end 242 of the pin may abut against the bracket 25 when the cable exerts a tension force on the cable support 27 that is higher than the threshold tension force provided by the spring 28 so that it compresses the spring.

In any of the illustrated examples, the required threshold force will be linked to the weight of the cable. The weight of the cable is dependent *inter alia* on the wind tower height, the power supply (copper cross-section), the construction (materials used and isolation) and/or if the cable is carrying control signals (additional leads). The threshold force may be calculated as the result of the maximum weight of the cable multiplied by a dynamic factor that is dependent of the acceleration when starting or stopping. The threshold force should be bigger than the weight of cable multiplied by the dynamic factor and smaller than a force that can damage the cable.
Further, in any of the illustrated examples, the cable protection system may be directly or indirectly mounted to a suitable portion of the elevator cabin, in particular a portion of the roof (ceiling) or a portion of the bottom (floor) of the elevator cabin.
Although only a number of examples have been disclosed herein, other alternatives, modifications, uses and/or equivalents thereof are possible. The scope of the invention is determined by the claims that follow.

## Claims

1. A wind turbine comprising an elevator system, the elevator system comprising:
an elevator cabin (2) configured to run along an elevator path,
a drive for moving the elevator cabin (2) along the elevator path, and
a cable for supplying electrical power and/or control signals (3; 4) to the elevator cabin (2), the cable (3; 4) being connected at a first end to the elevator cabin (2),
**characterized in that**
the elevator system further comprises a cable protection system (6; 11), the cable protection system (6; 11) being attached to the elevator cabin (2) and comprising
a cable support (60) for holding a portion of the cable (3; 4),
an actuator (8; 141) operatively connected with the cable support (60); and
a restraint (7; 12-13-14) configured to retain the actuator (8; 141) or the cable support (60) up to a threshold force such that when the cable (3; 4) exerts a force on the cable support (60) that is higher than the threshold force, the actuator (8; 141) pushes against a switch (9; 16) to stop the drive, wherein
the restraint is configured to provide a magnetic force, or
the restraint is formed by a cantilever mounted plate (7) extending from a fixed end (71) to a moveable end (72), the cable support (60) being connected to the plate (7), at or near the moveable end (72).

2. The wind turbine of claim 1, wherein the restraint is formed by a cantilever mounted plate (7) extending from a fixed end (71) to a moveable end (72), and is configured to deform elastically under a bending load, the cable support (60) being connected to the plate (7), at or near the moveable end (72).

3. The wind turbine of claim 1, wherein the actuator is formed by a pin (8) attached to the cantilever mounted plate (7).

4. The wind turbine of claim 1, wherein when the restraint is configured to provide a magnetic force, the restraint comprises a first fixed plate (12) and a second movable plate (14), one of the first and second plates (12, 14) having magnets (13) being configured to attract the other plate, and the cable support (60) is connected to the second plate (14), wherein the second plate (14) is movably mounted with respect to the first plate (12).

5. The wind turbine of claim 4, wherein the second plate (14) is shaped such that when the cable exerts a force on the cable support that is higher than the threshold force provided by the magnets (13) and the first or second plate (12, 14), the second plate (14) pushes against the switch (16).

6. The wind turbine of claim 5, wherein the second plate (14) comprises a curved protrusion (141) configured to push against the switch (16) when the cable exerts a force on the cable support that is higher than the threshold force provided by the magnets (13) and the first or second plate (12, 14).

7. The wind turbine according to any of claims 1 - 6, wherein the actuator (8; 141) is configured to move along a path that is substantially perpendicular to a movement of the switch (9; 16).

8. The wind turbine of any of claims 1 - 7, wherein the switch (9; 16) is directly mounted to the elevator cabin (2) or to a support fixed to the elevator cabin (2).

9. The wind turbine of any of claims 1 - 8, wherein the switch (9; 16) is configured to move between an operating position and an interruption position and wherein the switch (9; 16) is arranged in an electrical circuit of the drive or the switch (9; 16) is arranged in an auxiliary electrical circuit configured to act on an electrical circuit of the drive.

10. The wind turbine of any of claims 1 - 9, wherein the elevator cabin is guided by a pair of taut cables.

## Patentansprüche

1. Eine Windturbine umfassend ein Aufzugsystem, wobei das Aufzugsystem folgendes umfasst:
eine Aufzugskabine (2), die konfiguriert ist, um sich entlang einer Aufzugsbahn zu bewegen,
eine Antriebsanlage zur Bewegung der Aufzugskabine (2) entlang der Aufzugsbahn,
und
ein Kabel zur Versorgung der Aufzugskabine (2) mit elektrischem Strom und/oder Steuersignalen (3; 4), wobei das Kabel (3; 4) an einem ersten Ende mit der Aufzugskabine (2) verbunden ist,
**dadurch gekennzeichnet, dass**
das Aufzugsystem weiterhin ein Kabelschutzsystem (6; 11) umfasst, wobei das Kabelschutzsystem (6; 11) an der Aufzugskabine (2) befestigt ist und folgendes umfasst
einen Kabelhalter (60) zur Halterung von einem Teil des Kabels (3; 4),
einen Aktor (8; 141), der betriebsfähig mit dem Kabelhalter (60) verbunden ist; und
eine Arretierung (7; 12-13-14), die konfiguriert ist, um den Aktor (8; 141) oder den Kabelhalter (60) bis zu einer Schwellenwertkraft zu halten, so dass, wenn das Kabel (3; 4) eine Kraft auf den Kabelhalter (60) ausübt, die größer als die Schwellenwertkraft ist, der Aktor (8; 141) an einen Schalter (9; 16) stößt, um die Antriebsanlage zu stoppen, wobei
die Arretierung konfiguriert ist, um eine magnetische Kraft bereitzustellen, oder
die Arretierung durch eine sich von einem festen Ende (71) bis zu einem beweglichen Ende (72) erstreckende freitragend montierte Platte (7) gebildet ist, wobei der Kabelhalter (60) an der Platte (7) an oder in der Nähe des beweglichen Endes (72) montiert ist.

2. Die Windturbine des Anspruchs 1, wobei die Arretierung durch eine sich von einem festen Ende (71) bis zu einem beweglichen Ende (72) erstreckende freitragend montierte Platte (7) gebildet und konfiguriert ist, um unter einer Biegebeanspruchung verformt zu werden, wobei der Kabelhalter (60) mit der Platte (7) am oder in der Nähe des beweglichen Endes (72) verbunden ist.

3. Die Windturbine des Anspruchs 1, wobei der Aktor durch einen an der freitragend montierten Platte (7) befestigten Zapfen (8) gebildet ist.

4. Die Windturbine des Anspruchs 1, wobei, wenn die Arretierung konfiguriert ist, um eine magnetische Kraft bereitzustellen, die Arretierung eine erste feste Platte (12) und eine zweite bewegliche Platte (14) umfasst, wobei eine von der ersten und der zweiten Platten (12, 14) Magnete (13) hat, die konfiguriert sind, um die andere Platte anzuziehen, und der Kabelhalter (60) mit der zweiten Platte (14) verbunden ist, wobei die zweite Platte (14) beweglich bezüglich der ersten Platte (12) ist.

5. Die Windturbine des Anspruchs 4, wobei die zweite Platte (14) so gestaltet ist, dass, wenn das Kabel eine Kraft auf den Kabelhalter ausübt, die größer als die durch die Magnete (13) und die erste oder zweite Platte (12, 14) bereitgestellte Schwellenwertkraft ist, die zweite Platte (14) an den Schalter (16) stößt.

6. Die Windturbine des Anspruchs 5, wobei die zweite Platte (14) einen gekrümmten Vorsprung (141) umfasst, der konfiguriert ist, um an den Schalter (16) zu stoßen, wenn das Kabel eine Kraft auf den Kabelhalter ausübt, die größer als die durch die Magnete (13) und die erste oder zweite Platte (12, 14) bereitgestellte Schwellenwertkraft ist.

7. Die Windturbine nach einem der Ansprüche 1 - 6, wobei der Aktor (8; 141) konfiguriert ist, um sich entlang einer Bahn zu bewegen, die im Wesentlichen senkrecht zu einer Bewegung des Schalters (9; 16) ist.

8. Die Windturbine von einem der Ansprüche 1 - 7, wobei der Schalter (9; 16) unmittelbar an der Aufzugskabine (2) oder an einem an der Aufzugskabine (2) montierten Halter montiert ist.

9. Die Windturbine von einem der Ansprüche 1 - 8, wobei der Schalter (9; 16) konfiguriert ist, um sich zwischen einer Betriebsposition und einer Unterbrechungsposition zu bewegen und wobei der Schalter (9; 16) in einem Schaltkreis der Antriebsanlage angeordnet ist oder der Schalter (9; 16) in einem Hilfsschaltkreis angeordnet ist, der konfiguriert ist, um auf einen Schaltkreis der Antriebsanlage zu wirken.

10. Die Windturbine von einem der Ansprüche 1 - 9, wobei die Aufzugskabine durch ein Paar von straffen Kabeln geführt ist.

## Revendications

1. Une éolienne comprenant un système élévateur, le système élévateur comprenant :
une cabine d'élévateur (2) configurée pour se déplacer le long d'un parcours d'élévateur,
un mécanisme de transmission pour déplacer la cabine d'élévateur (2) le long du parcours d'élévateur,
et
un câble pour fournir de la puissance électrique et/ou des signaux de contrôle (3 ; 4) à la cabine d'élévateur (2), le câble (3 ; 4) étant relié par une première extrémité à la cabine d'élévateur (2),
**caractérisée en ce que**
le système élévateur comprend en outre un système de protection de câble (6 ; 11), le système de protection de câble (6 ; 11) étant attaché à la cabine d'élévateur (2) et comprenant
un support de câble (60) pour tenir une partie du câble (3 ; 4),
un actionneur (8 ; 141) relié de façon opérationnelle avec le support de câble (60) ; et
un moyen de retenue (7; 12-13-14) configuré pour retenir l'actionneur (8 ; 141) ou le support de câble (60) jusqu'à une force de seuil, de sorte que, lorsque le câble (3 ; 4) exerce une force sur le support de câble (60) qui est supérieure à la force de seuil, alors l'actionneur (8 ; 141) est poussé contre un interrupteur (9 ; 16) afin d'arrêter le mécanisme de transmission, où
le moyen de retenu est configuré pour fournir une force magnétique, ou
le moyen de retenu est formé par une plaque montée en porte-à-faux (7) s'étendant d'une extrémité fixe (71) à une extrémité mobile (72), le câble de support (60) étant connecté à la plaque (7) par l'extrémité mobile (72) ou près de celle-ci.

2. L'éolienne de la revendication 1, dans laquelle le moyen de retenu est formé par une plaque montée en porte-à-faux (7) s'étendant d'une extrémité fixe (71) à une extrémité mobile (72), et il est configuré de façon à être déformé élastiquement sous une charge de flexion, le câble de support (60) étant connecté à la plaque (7) par l'extrémité mobile (72) ou près de celle-ci.

3. L'éolienne de la revendication 1, dans laquelle l'actionneur est formé par une goupille (8) attachée à la plaque montée en porte-à-faux (7).

4. L'éolienne de la revendication 1, dans laquelle, lorsque le moyen de retenu est configuré pour fournir une force magnétique, le moyen de retenu comprend une première plaque fixe (12) et une seconde plaque mobile (14), l'une des plaques première et seconde (12, 14) ayant des aimants (13) configurés pour attirer l'autre plaque, et le support de câble (60) est connecté à la seconde plaque (14), où la seconde plaque (14) est montée de façon mobile par rapport à la première plaque (12).

5. L'éolienne de la revendication 4, dans laquelle la seconde plaque (14) est formée de sorte que, lorsque le câble exerce une force sur le support de câble qui est supérieure à la force de seuil fournie par les aimants (13) et la première et la seconde plaque (12, 14), alors la seconde plaque (14) est poussée contre l'interrupteur (16).

6. L'éolienne de la revendication 5, dans laquelle la seconde plaque (14) comprend une saillie courbe (141) configurée pour être poussée contre l'interrupteur (16) lorsque le câble exerce une force sur le support de câble qui est supérieure à la force de seuil fournie par les aimants (13) et la première ou la seconde plaque (12, 14).

7. L'éolienne selon l'une quelconque des revendications 1 - 6, dans laquelle l'actionneur (8 ; 141) est configuré pour se déplacer le long d'un parcours qui est essentiellement perpendiculaire à un mouvement de l'interrupteur (9 ; 16).

8. L'éolienne de l'une quelconque des revendications 1 - 7, dans laquelle l'interrupteur (9 ; 16) est monté directement sur la cabine d'élévateur (2) ou sur un support fixé à la cabine d'élévateur (2).

9. L'éolienne de l'une quelconque des revendications 1 - 8, dans laquelle l'interrupteur (9 ; 16) est configuré pour se déplacer entre une position de fonctionnement et une position d'interruption et dans laquelle l'interrupteur (9 ; 16) est disposé dans un circuit électrique du mécanisme de transmission ou l'interrupteur (9 ; 16) est disposé dans un circuit électrique auxiliaire configuré pour agir sur un circuit électrique du mécanisme de transmission.

10. L'éolienne de l'une quelconque des revendications 1 - 9, dans laquelle la cabine d'élévateur est guidée par une paire de câbles tendus.
